# EUROPÄISCHE PATENTSCHRIFT

(11) **EP 1 758 823 B1**
(45) Veröffentlichungstag und Bekanntmachung des Hinweises auf die Patenterteilung: **12.10.2016**
(21) Anmeldenummer: 05733951.7
(22) Anmeldetag: 28.04.2005
(51) Int. Cl.: C01G 41/02, C01G 41/00, C22B 34/36

(54) **WOLFRAMSÄUREPULVER BESTEHEND AUS SPHÄRISCHEN WOLFRAMSÄUREPARTIKELN UND VERFAHREN ZU DEREN HERSTELLUNG**
TUNGSTIC ACID POWDER CONSISTING OF SPHERICAL TUNGSTEN PARTICLES AND METHOD FOR PRODUCING SAME
ACIDE TUNGSTIQUE PULVERULENT A BASE DE PARTICULES D ACIDE TUNGSTIQUE SPHERIQUES ET PROCEDE DE PRODUCTION CORRESPONDANT

(30) Priorität: 11.05.2004 DE 102004023068
(43) Veröffentlichungstag der Anmeldung: 07.03.2007
(73) Patentinhaber: H.C. Starck GmbH, 38642 Goslar (DE)
(72) Erfinder: ALBRECHT, Sven, 38642 Goslar (DE); OLBRICH, Armin, 38723 Seesen (DE); REISS, Michael, 38667 Bad Harzburg (DE); SCHRUMPF, Frank, 38640 Goslar (DE); MEESE-MARKTSCHEFFEL, Juliane, 38642 Goslar (DE); KUTZLER, Uwe, 38690 Vienenburg (DE)
(86) Internationale Anmeldenummer: PCT/EP2005/004550
(87) Internationale Veröffentlichungsnummer: WO 2005/110923

(56) Entgegenhaltungen:
- DE-A1- 1 592 472
- US-A1- 2004 214 731
- N. KUMAGAI, Y. MATSUURA, Y. UMETZU, K. TANNO: "Preparation and Characterization of tungstic acid C phases containing various cations" SOLID STATE IONICS, Bd. 53-56, 1992, Seiten 324-332, XP002344289

## Beschreibung

Die Erfindung betrifft ein Verfahren zur Herstellung von Wolframsäure H₂W0₄, so erhältliche Wolframsäure mit hoher Schüttdichte und deren Verwendung zur Herstellung von Wolframmetallpulver.

Wolfram-Metallpulver (WMP) wird großtechnisch durch Reduktion von Wolframoxiden hergestellt, welche durch Kalzination von reinem Ammoniumparawolframat (APW) gewonnen werden. Dazu wird in der Regel eine technische, d.h. verunreinigte Natriumwolframat-Lösung aus der Verarbeitung von Schrotten oder Erzen zunächst einer Reinigung durch Fällprozesse unterzogen, anschließend durch Solventextraktion (SX) in das Ammoniumsalz überführt, und die resultierenden Ammoniumwolframat-Lösungen durch Einengen zu reinem APW kristallisiert. Hierbei werden verfahrensbedingt zwangsweise Produkte hoher Reinheit erhalten. Durch Ansäuern einer Dispersion des APW mit Salpetersäure kann Wolframsäure gewonnen werden, die ihrerseits zu WMP reduziert werden kann. Das Verfahren ist aufgrund der notwendigen Vielzahl an Prozessschritten und insbesondere wegen der notwendigen Solventextraktion aufwändig und entsprechend teuer. Für eine Reihe von Anwendungen von APW bzw. WMP im Hartmetall-/Schwermetallsektor ist die erreichte Reinheit der Produkte nicht erforderlich.

Nachteilig an dem beschriebenen Vorgehen ist weiterhin, dass die aus Dispersion hergestellten Wolframsäuren unregelmäßig geformte, flockige Morphologie und dadurch sehr niedrige Schüttdichten um 0,5 g/cm³ aufweisen. Die Handhabung und Weiterverarbeitung, beispielsweise zu WMP, wird dadurch erschwert. Sphäroidisch agglomerierte Wolframsäure ist bisher nicht bekannt.

EP 0 219 787 B1 offenbart ein Verfahren zur Reinigung von Alkali- oder Ammonium-Wolframat- und/oder Molybdat-Lösungen durch Elektrodialyse. Das Ansäuern der alkalischen Lösung erfolgt durch Zugabe reiner Wolframsäure. Die anodenseitig anfallende Wolframsäure ist durch die verwendete Membran von der kathodisch gebildeten Natronlauge getrennt, und die Natronlauge kann daher zum Aufschluss des Wolframrohstoffes wiederverwendet werden. Auf diese Weise lassen sich jedoch keine sphäroidisch agglomerierte Wolframsäuren hoher Schüttdichte erhalten.

In DD 148 522 wird ein aufwändiges Verfahren zur Herstellung von gut sedimentierender Wolframsäure aus wolframhaltigen Schrotten beschrieben. Dazu wird nach dem allgemein üblichen oxidativen alkalischen Schrottaufschluss, anschließender Reinigung der erhaltenen Alkaliwolframatlauge und Verfällen dieser Lauge mit Calciumchlorid ein künstlicher Scheelit erzeugt, der zunächst durch Hochtemperaturbehandlung eine Kornvergröberung erfährt, und dann nach anschließender Wiederaufmahlung durch Versetzen mit Salzsäure in die beschriebene gut sedimentierende Wolframsäure umgewandelt wird. Insbesondere durch die notwendige Hochtemperaturbehandlung ist dieses Vorgehen unökonomisch. Die erhältliche Wolframsäure besitzt zwar ein zufriedenstellendes Sedimentationsverhalten, ist jedoch nicht sphäroidisch agglomeriert und weist nur eine niedrige Schüttdichte auf, und ist daher als Vorstoff für eine wirtschaftliche Produktion von Wolfram-Metallpulver nicht geeignet.

In der DE1592472 wird ein Verfahren zur Herstellung von Wolframsäure beschrieben. Hierzu wird aus Alkaliwolframatlösungen durch Hydrolyse mit einer Mineralsäure die Wolframsäure ausgefällt. Eine bestimmtes Verhältnis von Mineralsäure zu Wolfram wird in der DE1592472 allerdings nicht offenbart.

Kumagai et al., Solid State Ionics, 53-56 (1992), 324-332, beschreiben die Herstellung und Charakterisierung von Wolframsäuren auf der Basis verschiedener Kationen. Hierbei wird eine 0.25 M Natriumwolframatlösung mit 3N und 5N heißer Salzsäure bei 100°C gemischt, wobei nach dem Kochen die Wolframsäure als weißes Pulver erhalten wird.

Aufgabe dieser Erfindung ist es, Wolframsäure geeigneter Morphologie und Reinheit, die als kostengünstiger Rohstoff für die Reduktion zu Wolfram-Metallpulvern verschiedener Qualitäten vorteilhaft eingesetzt werden kann, und ein wirtschaftliches Verfahren zur Herstellung dieser Wolframsäure bereitzustellen.

Die Aufgabe wird durch ein Umsetzen von Wolframat-Lösungen mit Mineralsäuren bei erhöhter Temperatur gelöst.

Gegenstand der Erfindung ist daher ein Verfahren zur Herstellung einer pulverförmigen Wolframsäure durch Ansäuern einer wässrigen Alkaliwolframat-Lösung, wobei die Alkaliwolframat-Lösung mit einer Mineralsäure bei einer Temperatur von 50 bis 103°C umgesetzt wird und dabei das molare Verhältnis von Mineralsäure zu Wolfram 9:1 bis 4:1 beträgt und die Alkaliwolframatlösung eine Konzentration an Wolfram von 150 g/l bis 300 g/l aufweist.

Gegenstand der Erfindung ist weiterhin ein Wolframsäurepulver, welches eine Schüttdichte gemäß ASTM B 329 von mindestens 1,5 g/cm³ aufweist.Eine nach dem erfindungsgemäßen Verfahren hergestellte Wolframsäure zeichnet sich durch eine sphärische Morphologie und dadurch gute Filtrations- und Wascheigenschaften, sowie nach der Trocknung durch hohe Schüttdichten und ein ausgezeichnetes Fließverhalten aus. Aufgrund dieser Eigenschaften eignet sich diese Wolframsäure hervorragend zur Herstellung von Wolfram-Metallpulver.

Als Mineralsäuren eignen sich beispielsweise Schwefelsäure, Salzsäure und Salpetersäure. Beim Einsatz von Salpetersäure fallen als Nebenprodukt jedoch Nitratlösungen (meist Ammoniumnitrat) an, die aufwändig entsorgt werden müssen, so dass vorzugsweise Schwefelsäure oder Salzsäure, insbesondere bevorzugt Schwefelsäure eingesetzt wird.

Durch die erfindungsgemäße bevorzugte Verwendung von Schwefelsäure oder Salzsäure wird die Bildung von Alkali- oder Ammoniumnitraten vermieden. Die Mutterlaugen mit überschüssiger Säure können direkt in eine Ansäuerungsstufe der in der W-Chemie oftmals notwendigen Solventextraktion eingespeist und auch die Waschwässer ohne separate Vorbehandlung mit dem Raffinat einer Solventextraktion vereinigt werden.

Erfindungsgemäß erfolgt die Fällungsreaktion bei erhöhter Temperatur, vorzugsweise beträgt die Temperatur 70 bis 100°C, insbesondere bevorzugt 75 bis 95°C.

Das erfindungsgemäße Verfahren kann kontinuierlich oder im Batch-Betrieb durchgeführt werden.

Bevorzugt ist eine kontinuierliche Verfahrensführung. Vorzugsweise wird die Umsetzung in einem Durchflussrührkessel oder einer Kaskade aus mindestens zwei Durchflussrührkesseln durchgeführt. Mineralsäure und Alkaliwolframat-Lösung werden dem Reaktionsraum kontinuierlich zudosiert, die entstehende Wolframsäure wird kontinuierlich abgezogen.

Die bevorzugte Rührgeschwindigkeit ist abhängig vom Reaktorvolumen. Als geeignete Rührgeschwindigkeit seien beispielsweise 800 bis 1200 Umdrehungen pro Minute (U/min) genannt. Vorzugsweise tragen die Durchflussrührkessel an der Innenwand Strombrecher. Dadurch wird die Durchmischung der Reaktanden intensiviert und der Energieeintrag erhöht.

Wird in einer Rührkesselkaskade gearbeitet, wird vorzugsweise so vorgegangen, dass die Mineralsäure und ein Teil der Alkaliwolframat-Lösung dem ersten Rührkessel zudosiert wird, während der verbleibende Teil an Alkaliwolframat-Lösung erst in den zweiten bzw. die weiteren Rührkessel zugegeben wird. Vorzugsweise wird dabei die Gesamtmenge an umzusetzender Alkaliwolframat-Lösung in gleiche Teile aufgeteilt, so dass jedem Rührkessel die gleiche Menge an Alkaliwolframat-Lösung zugegeben wird.

Als Alkaliwolframat-Lösung kann jede wässrige Lösung des Wolframats eines beliebigen Alkalimetalls eingesetzt werden. Auch der Einsatz von Ammoniumwolframat ist möglich. Vorzugsweise wird jedoch Natriumwolframat-Lösung, insbesondere technische Natriumwolframat-Lösung, eingesetzt. Die Reinheit der Alkaliwolframat-Lösung kann entsprechend der Reinheitsanforderungen für das Endprodukt gewählt werden.

Die Konzentration an Wolfram in der eingesetzten Alkaliwolframat-Lösung beträgt 150 bis 300 g/l, insbesondere bevorzugt 200 bis 250 g/l. Es ist aber auch die Verwendung von konzentrierteren Lösungen, beispielsweise einer Autoklavenlauge mit einem Gehalt an WO₃ von ca. 250 bis 350 g/l, möglich. Dadurch kann die erfindungsgemäße Umsetzung in vergleichsweise kleinen Reaktoren durchgeführt werden.

Die Mineralsäure wird bevorzugt in konzentrierter Form eingesetzt. Bei Verwendung von Schwefelsäure wird diese bevorzugt als wässrige Schwefelsäure mit einer Konzentration an Schwefelsäure von 50 bis 70 Gew.-%, vorzugsweise von 55 bis 60 Gew.-% eingesetzt.

Die Umsetzung der Alkaliwolframat-Lösung mit der Mineralsäure wird bei einem molaren Verhältnis von Mineralsäure zu Wolfram von 9:1 bis 4:1 durchgeführt.

Die Volumenströme an Mineralsäure und Alkaliwolframat-Lösung werden vorzugsweise so eingestellt, dass das Verhältnis von Volumenstrom an Mineralsäure zum Gesamtvolumenstrom an Alkaliwolframat-Lösung 1 : 0,5 bis 1 : 2, vorzugsweise von 1 : 0,9 bis 1 : 1,2 beträgt.

Durch geeignete Wahl der Volumenströme und der Konzentrationen der eingesetzten Lösungen wird sichergestellt, dass sich der gewünschte pH-Wert einstellt.

Der absolute Volumenstrom an Mineralsäure und Alkaliwolframat-Lösung beträgt bei einem Gesamtvolumen des Reaktionsraums von etwa 4 Liter vorzugsweise 500 bis 1000 ml/h, so dass sich eine Verweilzeit der Reaktionskomponenten im Reaktionsraum von 4 bis 8 Stunden ergibt. Diese Verweilzeit wird unabhängig vom gewählten Reaktorvolumen vorzugsweise eingestellt, insbesondere bevorzugt ist eine Verweilzeit von 4 bis 6 Stunden.

Die aus der Reaktionslösung ausfallende Wolframsäure kann durch Filtration abgetrennt werden, und wird in der Regel anschließend gewaschen und getrocknet.

Das Waschen der Wolframsäure kann mit deionisiertem Wasser erfolgen. Durch Waschen mit verdünnter Mineralsäure kann der Alkaligehalt in der Wolframsäure herabgesetzt werden. Soll Wolframsäure mit sehr niedrigem Alkaligehalt erhalten werden, ist also ein Waschen mit verdünnter Mineralsäure, insbesondere verdünnter Schwefelsäure, bevorzugt, wobei sich wiederum ein Waschvorgang mit deionisiertem Wasser anschließen kann.

Die Trocknung wird vorzugsweise bei einer Temperatur von 50 bis 150°C, besonders bevorzugt von 70 bis 110°C durchgeführt. Die Trocknungszeit beträgt vorzugsweise 1 bis 100 h, besonders bevorzugt 10 bis 30 h.

Das erfindungsgemäße Verfahren erlaubt die Herstellung von Wolframsäure mit hoher Schüttdichte und guter Fließfähigkeit.

Die erfindungsgemäß erhältliche Wolframsäure zeichnet sich weiterhin durch eine sphärische Morphologie aus, d.h. die Primärpartikel sind sphärisch oder zu sphärischen Agglomeraten zusammengelagert.

Die besondere Morphologie und die hohe Schüttdichte erlauben eine einfache Handhabung der Pulver. So zeigen sie ein gutes Filtrationsverhalten und sind in trockenem Zustand in der Regel gut fließfähig. Sie lassen sich durch Reduktion zu Wolframmetallpulver umsetzen, wobei die besonderen Eigenschaften der Wolframsäure die Wirtschaftlichkeit des Reduktionsprozesses deutlich erhöhen.

Gegenstand der Erfindung sind daher auch Wolframsäurepulver, die eine Schüttdichte gemäß ASTM B 329 von mindestens 1,5 g/cm³, vorzugsweise mindestens 1,9 g/cm³, besonders bevorzugt mindestens 2,0 g/cm³ aufweisen.

Vorzugsweise beträgt der mittleren Partikeldurchmesser D₅₀, bestimmt mittels MasterSizer nach ASTM B 822 3 bis 80 µm, besonders bevorzugt 5 bis 30 µm.

Der Gehalt an Alkalimetall, der in der Wolframsäure verbleibt, lässt sich mittels Waschung der Wolframsäure steuern. Vorzugsweise weist die erfindungsgemäße Wolframsäure einen Gehalt an Alkaliverunreinigungen von < 0,5 Gew.-%, besonders bevorzugt < 0,15 Gew.-% auf.

Vorzugsweise weisen die Partikel der erfindungsgemäßen Wolframsäurepulver eine sphärische Morphologie auf.

Solche Wolframsäurepulver sind nach dem erfindungsgemäßen Verfahren erhältlich.

Zur Bestimmung der Morphologie der Wolframsäurepulver werden bildgebende Verfahren eingesetzt. Unter Verwendung eines Rasterelektronenmikroskops bei 200-facher Vergrößerung wird eine zweidimensionale Abbildung einer Pulverprobe gewonnen. Dazu wird das Pulver auf einen quadratischen Träger mit haftender Oberfläche aufgebracht. Es wird ein Sichtbereich untersucht, in dem mindestens 200 Partikel sichtbar sind. Die in dieser Abbildung sichtbaren Pulverpartikel werden ausgewertet. Dazu wird um ein abgebildetes Pulverpartikel ein Kreis gelegt, der die beiden Punkte des Partikelumfangs berührt, die maximalen Abstand voneinander aufweisen. Es wird ein weiterer Kreis mit identischem Mittelpunkt gezogen, der nunmehr die beiden Punkte des Partikelumfangs berührt, die minimalen Abstand voneinander aufweisen. Das Verhältnis des Durchmessers dieser beiden Kreise dient als Beschreibungskriterium für die Morphologie des Wolframsäurepulvers. Ein ideal kugelförmiges Pulverpartikel weist ein Verhältnis von 1 auf, da alle Punkte auf der Oberfläche des Pulverpartikels gleich weit vom Mittelpunkt des Partikels entfernt sind.

Unter sphärischen Wolframsäurepulvern, d.h. Wolframsäurepulvern deren Pulverpartikel annähernd Kugelgestalt aufweisen, werden solche Pulver verstanden, bei denen mindestens 95 % der Pulverpartikel ein Verhältnis von Durchmesser des größeren Kreises zu Durchmesser des kleineren Kreises von 1,0 bis 1,4 aufweisen.

Erfolgt die Fällung der Wolframsäure durch Zugabe von Schwefelsäure, so weist die erfindungsgemäße Wolframsäure vergleichsweise hohe Sulfatgehalte um 6000 ppm auf. Diese erweisen sich aber bei der Herstellung von Wolframmetallpulver als nicht störend. Der Schwefel wird bei einer Reduktion der Wolframsäure vollständig in H₂S umgewandelt, welches aus dem Ofengas über einen Wäscher als Natriumsulfid abgetrennt werden kann. Durch Variation der Reduktionsbedingungen lassen sich zudem der mittlere Korndurchmesser und die Korngrößenverteilung und der Gehalt an Alkaliverunreinigung im Wolframmetallpulver regulieren.

Die erfindungsgemäßen Wolframsäurepulver eignen sich hervorragend zur Herstellung von Wolframmetallpulver.

Gegenstand der Erfindung ist daher weiterhin die Verwendung der erfindungsgemäßen Wolframsäurepulver zur Herstellung von Wolframmetallpulver.

Dazu wird das Wolframsäurepulver in dem Fachmann geläufiger Art und Weise reduziert. Vorzugsweise wird die Reduktion in einem Wasserstoffstrom durchgeführt.

Die Erfindung wird nachfolgend anhand von Beispielen näher erläutert, wobei die Beispiele das Verständnis des erfindungsgemäßen Prinzips erleichtern sollen, und nicht als Einschränkung desselben zu verstehen sind.

### Beispiele

Die in den folgenden Beispielen hergestellten Wolframsäuren wurden, wie in den Beispielen angegeben, hinsichtlich verschiedener chemischer und physikalischer Eigenschaften untersucht. Soweit nicht anders vermerkt, wurde dabei wie folgt vorgegangen:
Die mittlere Korngröße (D₅₀-Wert) wurde mittels Laserbeugung unter Verwendung eines MasterSizer Sµ der Firma MALVERN (ASTM B 822) und die Schüttdichte gemäß ASTM B 329 bestimmt. Bei den Prozentangaben handelt es sich, sofern nicht anders angegeben, um Gewichtsprozent.

### Beispiel 1

Zur kontinuierlichen Fällung von sphäroidischer Wolframsäure wurde in einer Fällungsapparatur aus zwei Rührreaktoren (Reaktor 1 und Reaktor 2) gearbeitet, wobei der Überlauf aus Reaktor 1 direkt in den Reaktor 2 eingeleitet und der Überlauf aus Reaktor 2 als Produktsuspension aufgearbeitet wurde.

Die Zuführung der Eduktlösungen erfolgte mittels massengesteuerter Dosiersteuereinheiten, die eine konstante und reproduzierbare Dosierung gleicher Massen der Lösungen pro Zeiteinheit gewährleisteten. In dieser Kaskade aus zwei hintereinander geschalteten Rührreaktoren wurde durch kontinuierliche Zuführung einer 58%igen Schwefelsäure und einer Natriumwolframat-Lösung (W-Gehalt 234 g/l) unter ständigem Rühren bei einer Temperatur von 85°C Wolframsäure gefällt. Die Zuführung der Schwefelsäure erfolgte mit einer Dosierrate von 760 ml/h in Reaktor 1, die Zuführung der Natriumwolframat-Lösung wurde in zwei gleich große Teilströme mit jeweils 380 ml/h in Reaktor 1 und 380 ml/h in Reaktor 2 aufgeteilt. Die Rührgeschwindigkeit betrug in beiden Reaktoren 1000 U/min. Da das Volumen der beiden Reaktoren jeweils 3,9 1 betrug, resultierte bei den angegebenen Dosiermengen eine Verweilzeit von ca. 5h. Es wurden pro Stunde 1450 ml Wolframsäure-Suspension mit 240 g Wolframsäure-Inhalt erhalten.

Nach einer Vorlaufzeit von 5 Verweilzeiten wurde die Produktsuspension gesammelt und einmal pro Tag durch Abnutschen und Waschen mit 13 1 80°C heißem vollentionisiertem Wasser (VE-Wasser) aufgearbeitet. Nach 24-stündiger Trocknung bei 100°C im Umlufttrockenschrank wurden 5760 g Wolframsäure mit folgenden Eigenschaften erhalten.
W: 73,35 %
Na: 0,13 %
Sulfat: 6080 ppm
D₅₀: 11,84 µm
Schüttdichte: 2,1 g/cm³
Pyknometrische Dichte: 5,38 g/cm³
Trockenverlust bis 450°C (Thermogravimetrie): 7,8 %

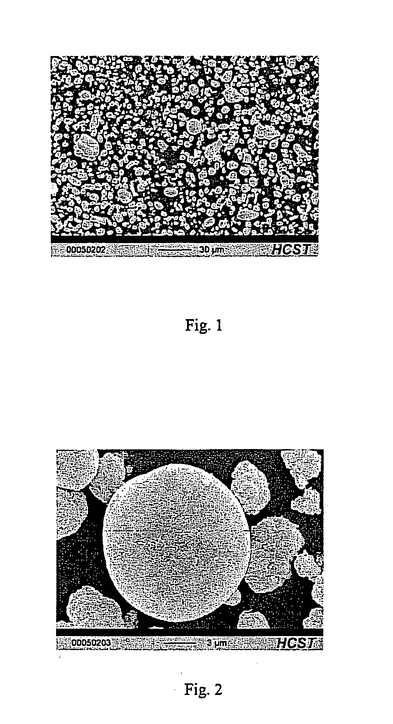

Fig. 1 und 2 geben rasterelektronenmikroskopische Abbildungen der so hergestellten Wolframsäure wieder (Fig. 1: 500-fache Vergrößerung, Fig. 2: 5000-fache Vergrößerung). Es ist deutlich zu erkennen, dass die einzelnen Pulverpartikel eine sphärische Morphologie aufweisen.

### Vergleichsbeispiel

Die Fällungstemperatur wurde in diesem Beispiel zu 20°C gewählt, alle anderen Parameter waren identisch zum erfindungsgemäßen Beispiel 1. Die so erhaltene Wolframsäure war schwer filtrierbar und deutlich voluminöser als das nach Beispiel 1 erhaltene Produkt.

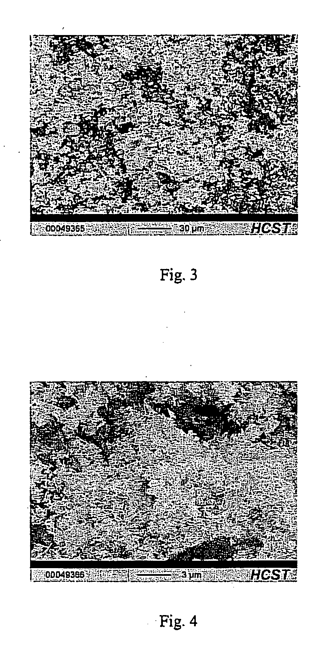

Fig. 3 und 4 geben rasterelektronenmikroskopische Abbildungen der so hergestellten Wolframsäure wieder (Fig. 3: 500-fache Vergrößerung, Fig. 4: 5000-fache Vergrößerung). Es ist deutlich zu erkennen, dass die Wolframsäure keine sphärische, sondern eine flockige Morphologie aufweist.

### Beispiel 2

Es wurde entsprechend Beispiel 1 vorgegangen, wobei jedoch das von der Mutterlauge abgetrennte Produkt nicht mit 80°C heißem VE-Wasser, sondern mit einer 80°C heißen, verdünnten Schwefelsäure (7ml konz. H₂SO₄ auf 1 1 VE-Wasser) gewaschen wurde. Der Na-Gehalt der so erhaltenen sphäroidischen Wolframsäure betrug nun nur noch 233 ppm.

### Beispiel 3

Es wurde eine Wolframsäure unter den in Beispiel 1 genannten Bedingungen gefällt, wobei die Reaktion nicht in einer Kaskade aus zwei Reaktoren, sondern in einem einzelnen Reaktor durchgeführt wurde. Die Aufteilung der Natriumwolframat-Lösung gemäß Beispiel 1 musste dabei zwangsläufig unterbleiben, außerdem wurden die Dosiermengen so eingestellt, dass die Verweilzeit in dem einen Reaktor gleich der Gesamtverweilzeit in den Reaktoren 1 und 2 aus Beispiel 1 war. Man erhielt ebenfalls wieder ein sphäroidisches Produkt. Der D₅₀-Wert betrug 10,37 µm.

## Patentansprüche

1. Verfahren zur Herstellung einer pulverförmigen Wolframsäure, wobei eine wässrige Alkaliwolframat-Lösung mit einer Mineralsäure bei einer Temperatur von 50 bis 103°C umgesetzt wird, **dadurch gekennzeichnet, dass** das molare Verhältnis von Mineralsäure zu Wolfram 9:1 bis 4:1 beträgt und die Alkaliwolframatlösung eine Konzentration an Wolfram von 150 g/l bis 300 g/l aufweist.

2. Verfahren gemäß Anspruch 1, **dadurch gekennzeichnet, dass** die Umsetzung bei einer Temperatur von 70 bis 100°C erfolgt.

3. Verfahren gemäß wenigstens einem der Ansprüche 1 und 2, **dadurch gekennzeichnet, dass** die Umsetzung kontinuierlich in einem Durchflussrührkessel oder einer Kaskade aus mindestens zwei Durchflussrührkesseln durchgeführt wird.

4. Verfahren gemäß wenigstens einem der Ansprüche 1 bis 3, **dadurch gekennzeichnet, dass** als Alkaliwolframat-Lösung wässrige Natriumwolframat-Lösung eingesetzt wird.

5. Verfahren gemäß wenigstens einem der Ansprüche 1 bis 4, **dadurch gekennzeichnet, dass** als Mineralsäure wässrige Schwefelsäure mit einem Gehalt an H₂SO₄ von 50 bis 70 Gew.-% eingesetzt wird.

6. Verfahren gemäß wenigstens einem der Ansprüche 1 bis 5, **dadurch gekennzeichnet, dass** die Verweilzeit im Reaktionsraum 4 bis 6 h beträgt.

7. Wolframsäurepulver, **dadurch gekennzeichnet, dass** die Schüttdichte gemäß ASTM B 329 mindestens 1,5 g/cm³ beträgt.

8. Wolframsäurepulver gemäß Anspruch 7, **dadurch gekennzeichnet, dass** der mittlere Partikeldurchmesser D₅₀, bestimmt nach ASTM B 822 3 bis 80 µm beträgt.

9. Wolframsäurepulver gemäß wenigstens einem der Ansprüche 7 und 8, **dadurch gekennzeichnet, dass** der Gehalt an Alkaliverunreinigungen < 0,5 Gew.-% beträgt.

10. Wolframsäurepulver gemäß wenigstens einem der Ansprüche 7 bis 9, **dadurch gekennzeichnet, dass** die Pulverpartikel eine sphärische Morphologie aufweisen.

11. Verwendung eines Wolframsäurepulvers gemäß wenigstens einem der Ansprüche 7 bis 10 zur Herstellung von Wolframmetallpulver.

## Claims

1. Process for producing a pulverulent tungstic acid, in which an aqueous alkali metal tungstate solution is reacted with a mineral acid at a temperature of from 50 to 103°C, **characterized in that** the molar ratio of mineral acid to tungsten is from 9:1 to 4:1 and the alkali metal tungstate solution has a concentration of tungsten of from 150 g/l to 300 g/l.

2. Process according to Claim 1, **characterized in that** the reaction is carried out at a temperature of from 70 to 100°C.

3. Process according to at least one of Claims 1 and 2, **characterized in that** the reaction is carried out continuously in a continuous stirred tank reactor or a cascade composed of at least two continuous stirred tank reactors.

4. Process according to at least one of Claims 1 to 3, **characterized in that** aqueous sodium tungstate solution is used as alkali metal tungstate solution.

5. Process according to at least one of Claims 1 to 4, **characterized in that** aqueous sulphuric acid having a content of H₂SO₄ of from 50 to 70% by weight is used as mineral acid.

6. Process according to at least one of Claims 1 to 5, **characterized in that** the residence time in the reaction space is from 4 to 6 hours.

7. Tungstic acid powder, **characterized in that** the bulk density in accordance with ASTM B 329 is at least 1.5 g/cm³.

8. Tungstic acid powder according to Claim 7, **characterized in that** the average particle diameter D₅₀, determined in accordance with ASTM B 822, is from 3 to 80 µm.

9. Tungstic acid powder according to at least one of Claims 7 and 8, **characterized in that** the content of alkali metal impurities is < 0.5% by weight.

10. Tungstic acid powder according to at least one of Claims 7 to 9, **characterized in that** the powder particles have a spherical morphology.

11. Use of a tungstic acid powder according to at least one of Claims 7 to 10 for producing tungsten metal powder.

## Revendications

1. Procédé de fabrication d'un acide tungstique en poudre, selon lequel une solution aqueuse de tungstate alcalin est mise en réaction avec un acide minéral à une température de 50 à 103 °C, **caractérisé en ce que** le rapport molaire entre l'acide minéral et le tungstène est de 9:1 à 4:1, et la solution de tungstate alcalin présente une concentration en tungstène de 150 g/l à 300 g/l.

2. Procédé selon la revendication 1, **caractérisé en ce que** la réaction a lieu à une température de 70 à 100 °C.

3. Procédé selon au moins l'une quelconque des revendications 1 et 2, **caractérisé en ce que** la réaction est réalisée en continu dans une cuve agitée à écoulement ou dans une cascade d'au moins deux cuves agitées à écoulement.

4. Procédé selon au moins l'une quelconque des revendications 1 à 3, **caractérisé en ce qu'**une solution aqueuse de tungstate de sodium est utilisée en tant que solution de tungstate alcalin.

5. Procédé selon au moins l'une quelconque des revendications 1 à 4, **caractérisé en ce qu'**un acide sulfurique aqueux ayant une teneur en H₂SO₄ de 50 à 70 % en poids est utilisé en tant qu'acide minéral.

6. Procédé selon au moins l'une quelconque des revendications 1 à 5, **caractérisé en ce que** le temps de séjour dans la chambre de réaction est de 4 à 6 h.

7. Poudre d'acide tungstique, **caractérisée en ce que** la densité apparente selon ASTM B 329 est d'au moins 1,5 g/cm³.

8. Poudre d'acide tungstique selon la revendication 7, **caractérisée en ce que** le diamètre de particule moyen D₅₀, déterminé selon ASTM B 822 est de 3 à 80 µm.

9. Poudre d'acide tungstique selon au moins l'une quelconque des revendications 7 et 8, **caractérisée en ce que** la teneur en impuretés alcalines est < 0,5 % en poids.

10. Poudre d'acide tungstique selon au moins l'une quelconque des revendications 7 à 9, **caractérisée en ce que** les particules de la poudre présentent une morphologie sphérique.

11. Utilisation d'une poudre d'acide tungstique selon au moins l'une quelconque des revendications 7 à 10 pour la fabrication d'une poudre de tungstène métallique.
